# EUROPEAN PATENT APPLICATION

(11) **EP 4 465 585 A1**
(43) Date of publication of application: **20.11.2024**
(21) Application number: 24170489.9
(22) Date of filing: 16.04.2024
(51) Int. Cl.: H04L 9/00, G07F 17/32, G06Q 30/0282

(54) **ACCOUNT SELECTION PROGRAM, ACCOUNT SELECTION DEVICE, AND ACCOUNT SELECTION METHOD**

(30) Priority: 17.05.2023 JP 2023081841
(71) Applicant: FUJITSU LIMITED, Kawasaki-shi, Kanagawa 211-8588 (JP)
(72) Inventor: KAYABA, Keita, Kawasaki-shi, Kanagawa, 211-8588 (JP); FUJIMOTO, Shingo, Kawasaki-shi, Kanagawa, 211-8588 (JP)
(74) Representative: Hoffmann Eitle

(57) **Abstract**

An account selection program for causing a computer to execute a process. The process includes: by a smart contract in a blockchain in which a hashed identifier (ID) obtained by hashing an identifier of each of a plurality of blockchain (BC) accounts is stored, generating a seed value based on a random number; selecting a first hashed ID from a plurality of the hashed IDs based on the seed value; and selecting a second hashed ID from the plurality of the hashed IDs with the selected first hashed ID as the seed value.

## Description

### FIELD

The embodiment discussed herein is related to an account selection technique in a blockchain using a smart contract.

### BACKGROUND

In recent years, there has been an increasing interest in the distribution of communities and systems utilizing blockchain (BC) techniques such as, for example, Web3, decentralized autonomous organization (DAO), and token economy. For example, a decentralized community has a mechanism for democratic reward determination in which a reward for a certain thing, activity, or the like in a community is determined based on evaluation by a plurality of other persons in the community. In this way, a decentralized community ensures the fairness of evaluation such as review by other persons, and maintains the soundness of the community.

Japanese National Publication of International Patent Application No. 2022-541929, Japanese National Publication of International Patent Application No. 2020-515942, Japanese National Publication of International Patent Application No. 2022-523643, U.S. Patent Application Publication No. 2020/0204358, and Japanese National Publication of International Patent Application No. 2022-511623 are disclosed as related art.

### PROBLEMS

However, the current mechanism for reward determination has a problem that an operator of a community system may receive money from a person to be evaluated and easily perform an arbitrary operation such as increasing the number of high evaluations made for the person to be evaluated by using an account for performing unfair evaluation (so-called fake user account).

Accordingly, a technique is conceivable in which an arbitrary operation is suppressed by using a smart contract (SC) in a BC and randomly selecting a plurality of BC accounts in the BC respectively associated with a plurality of evaluators. As an example of the technique, for example, an SC randomly selects a BC account associated with an evaluator by using a random number generated by an external random number generation service (hereinafter referred to as a "random selection method 1").

However, in the random selection method 1, there are conceivable problems such as high monetary cost and difficulty in ensuring validity and authenticity of a generated random number (so-called oracle problem) since an external random number generation service is used.

Accordingly, for example, an SC causes a large number of unspecified users in a BC to asynchronously input arbitrary numerical value, and generates a random number by using each input numerical value. A technique is conceivable in which an SC uses the random number and randomly selects a BC account associated with an evaluator (hereinafter referred to as a "random selection method 2"). In the random selection method 2, since it is difficult for a specific user to know each numerical value input by a large number of unspecified users, validity and authenticity of a random number may be ensured, and since an external random number generation service is not used, monetary cost may be reduced.

Random selection using an SC may be selection of not only an evaluator of a decentralized community, but also a person, an object, or the like for which fairness and transparency are desired such as, for example, a speaker in a meeting or the like, a device for acquiring environmental data, and a winner of a prize.

However, in the random selection method 2, there is a conceivable problem that it takes time to generate one random number since asynchronous input of numerical values from a plurality of users is waited for. For example, in the random selection method 2, time cost is very high since random number generation processing is repeated many times when a plurality of BC accounts in a BC respectively associated with a plurality of evaluators or the like is selected in order to select the evaluators or the like.

In one aspect, an object is to reduce time cost in a case where a plurality of BC accounts in a BC is randomly selected by an SC.

### EFFECTS OF INVENTION

In one aspect, it is possible to reduce time cost in the case where a plurality of BC accounts in a BC is randomly selected by an SC.

### SUMMARY

According to an aspect of the embodiments, an account selection program for causing a computer to execute a process includes: by a smart contract in a blockchain in which a hashed identifier (ID) obtained by hashing an identifier of each of a plurality of blockchain (BC) accounts is stored, generating a seed value based on a random number; selecting a first hashed ID from a plurality of the hashed IDs based on the seed value; and selecting a second hashed ID from the plurality of the hashed IDs with the selected first hashed ID as the seed value.

### BRIEF DESCRIPTION OF DRAWINGS

FIG. 1 is a diagram for describing an arbitrary operation in a decentralized community system;
FIG. 2 is a diagram for describing suppression of arbitrary operation by random selection using an SC;
FIG. 3 is a diagram for describing a random selection method 1;
FIG. 4 is a diagram for describing a random selection method 2;
FIG. 5 is a diagram illustrating an example of the present random selection method;
FIG. 6 is a diagram for describing time cost for the random selection method 2 and the present random selection method;
FIG. 7 is a diagram illustrating a configuration example of an account selection device according to the present embodiment;
FIG. 8 is a diagram illustrating an example of data stored in user information according to the present embodiment;
FIG. 9 is a diagram illustrating an example of data stored in an account identifier (ID) array according to the present embodiment;
FIG. 10 is a flowchart illustrating an example of a flow of account selection processing according to the present embodiment;
FIG. 11 is a flowchart illustrating another example of a flow of the account selection processing according to the present embodiment;
FIG. 12 is a diagram (1) for describing the flowchart illustrating another example of a flow of the account selection processing according to the present embodiment;
FIG. 13 is a diagram (2) for describing the flowchart illustrating another example of a flow of the account selection processing according to the present embodiment;
FIG. 14 is a diagram (3) for describing the flowchart illustrating another example of a flow of the account selection processing according to the present embodiment;
FIG. 15 is a diagram (4) for describing the flowchart illustrating another example of a flow of the account selection processing according to the present embodiment; and
FIG. 16 is a diagram illustrating a hardware configuration example of the account selection device according to the present embodiment.

### DESCRIPTION OF EMBODIMENTS

Hereinafter, an exemplary embodiment of an account selection program, an account selection device, and an account selection method according to the present embodiment will be described in detail with reference to the drawings. The present embodiment is not limited by this exemplary embodiment. Each exemplary embodiment may be combined as appropriate within the scope without contradiction.

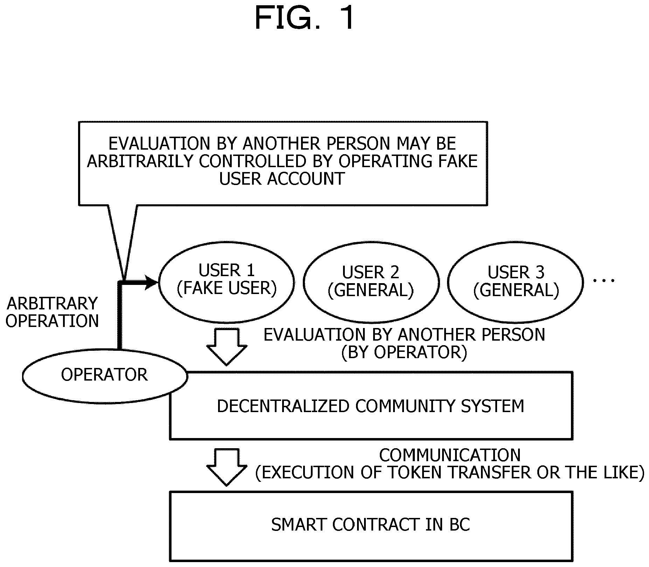

First, an arbitrary operation in a decentralized community system will be described. FIG. 1 is a diagram for describing an arbitrary operation in a decentralized community system. As illustrated in FIG. 1, in a decentralized community system utilizing a BC technique, for example, when a plurality of users evaluates a certain thing, activity, or the like (in the following description and in the claims, these are simply referred to as "a thing") in a community, a system operator may perform an arbitrary operation by using a fake user account. For example, the system operator may receive money from a person to be evaluated and easily perform an arbitrary operation that is advantageous to the person to be evaluated, such as selecting a fake user account as an evaluator and increasing the number of high evaluations made for the person to be evaluated. Such arbitrary operation may be performed in the selection of not only an evaluator of a decentralized community, but also a person, an object, or the like for which fairness and transparency are desired such as, for example, a speaker in a meeting or the like, a device for acquiring environmental data, and a winner of a prize.

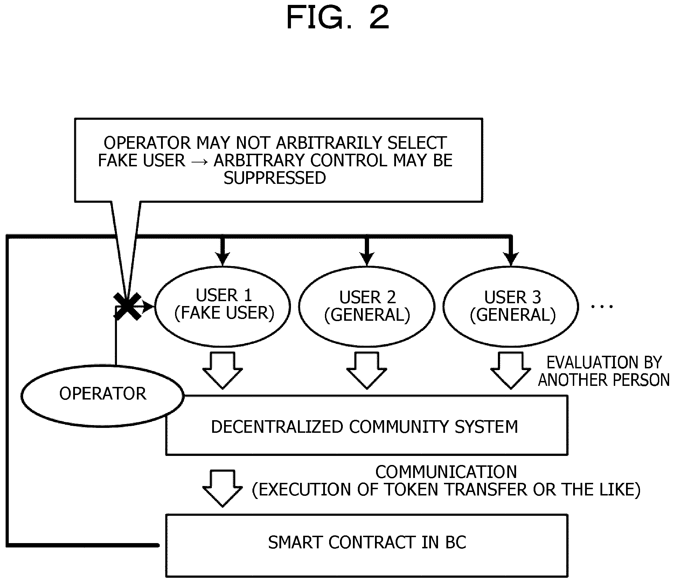

For this reason, a technique is conceivable in which an arbitrary operation is suppressed by randomly selecting a plurality of BC accounts in a BC using an SC in the BC. FIG. 2 is a diagram for describing suppression of arbitrary operation by random selection using an SC. As illustrated in FIG. 2, for example, when an evaluator is selected from a plurality of users respectively associated with a plurality of BC accounts in a BC, an evaluator may be selected randomly by selecting a BC account using an SC that is difficult to be tampered with. Accordingly, since the system operator may not arbitrarily select a fake user account, an arbitrary operation as described with reference to FIG. 1 may be suppressed.

A random number has to be generated in order to randomly select a BC account in a BC using an SC. However, since a BC is a mechanism in which same output is guaranteed for same input, for SC execution in any node (or a computer constituting a BC network also referred to as a peer or the like), a logic in which a random number is generated in an SC and the output changes depending on a result thereof, may not be implemented.

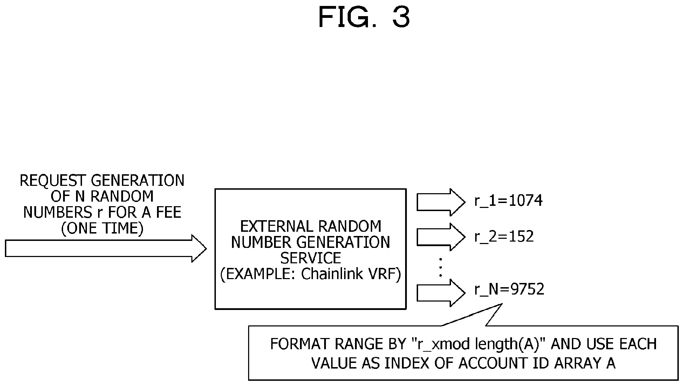

Accordingly, in the random selection method 1, for example, an SC randomly selects a BC account associated with an evaluator by using a random number generated by an external random number generation service. FIG. 3 is a diagram for describing the random selection method 1.

The random selection method 1 illustrated in FIG. 3 is an example in which an SC randomly selects N BC accounts by using N random numbers r acquired by using an external random number generation service such as Chainlink VRF. For example, an information processing device records, in advance by an SC, IDs, which are identifiers such as the addresses of the BC accounts of all users, in a BC as an array "account ID array A". For example, by the SC, the information processing device formats N random numbers acquired from an external random number generation service so as to be in the range of 0 to (length(A) - 1), and then selects N BC accounts by using the random numbers as indexes of the account ID array A.

However, in the random selection method 1, there is a problem of high monetary cost due to a higher cost in a case where a plurality of evaluators is selected since an external random number generation service is used. In the random selection method 1, there is also a problem of difficulty in ensuring validity and authenticity of a random number generated by an external random number generation service (so-called oracle problem).

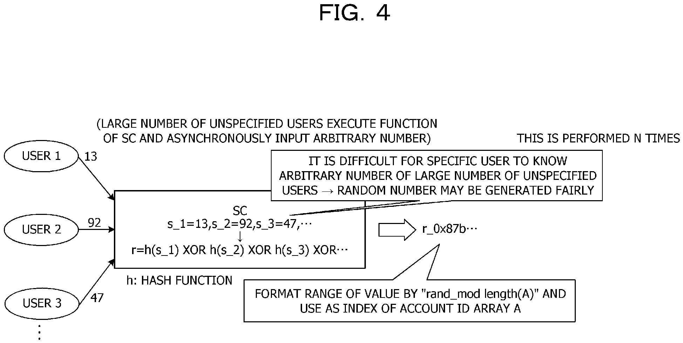

Accordingly, in the random selection method 2, for example, an SC causes a large number of unspecified users in a BC to asynchronously input arbitrary numerical value, and generates a random number by using each input numerical value. FIG. 4 is a diagram for describing the random selection method 2.

The random selection method 2 illustrated in FIG. 4 is an example in which an SC randomly selects N BC accounts by using a random number r generated by using the input values of a plurality of users. For example, an information processing device records, in advance by an SC, IDs, which are identifiers such as the addresses of the BC accounts of all users, in a BC as the array "account ID array A". For example, by the SC, the information processing device generates one random number r by a pseudo-random number generation method such as that illustrated in FIG. 4. For example, by the SC, the information processing device formats the generated random number r so as to be in the range of 0 to (length(A) - 1), and then performs processing of selecting one BC account N times by using the random number r as an index of the account ID array A.

In the random selection method 2, since an external random number generation service is not used as compared with the random selection method 1, monetary cost may be reduced. In the random selection method 2, since it is difficult for a specific user to know each numerical value input by a large number of unspecified users for generating a random number, validity and authenticity of the random number may be ensured.

However, in the random selection method 2, there are problems that it takes time to generate one random number since asynchronous input of numerical values from a plurality of users is waited for, and that time cost is very high since this is repeated N times.

Accordingly, one object of the present embodiment is to reduce time cost in a case where a plurality of BC accounts in a BC is selected by an SC. For this reason, in the present embodiment, for example, N BC accounts are randomly selected by using a seed value generated once by the random selection method 2 or the like and repeatedly applying the hash method to the array of hashed BC account IDs. Such random selection method according to the present embodiment is hereinafter referred to as the "present random selection method".

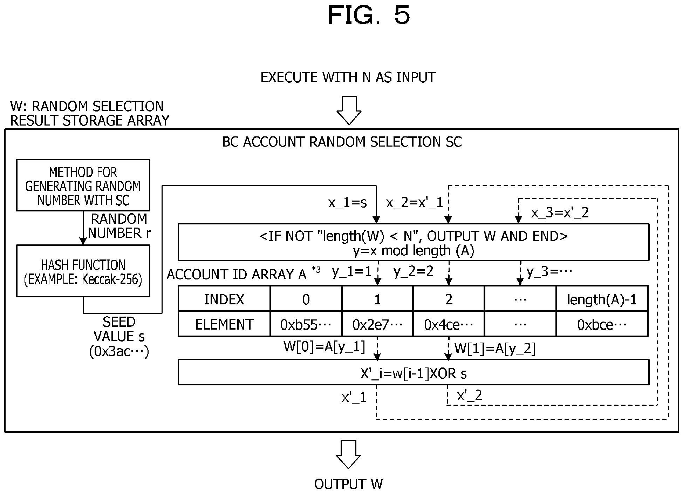

FIG. 5 is a diagram illustrating an example of the present random selection method. Although details of the present random selection method illustrated in FIG. 5 will be described later, first, for example, an SC generates one random number r by the random selection method 2 or the like and generates a seed value, and selects the first BC account by using the seed value. Next, for example, the SC selects the second BC account by using the first selected hashed BC account ID as the next seed value. In this way, (N - 1) BC accounts are selected by using the selected hashed BC account ID as the next seed value and repeating the BC account selection processing (N - 1) times. For example, N BC accounts are randomly selected with the first BC account selected by using the random selection method 2 or the like and the (N - 1) BC accounts.

In the present random selection method, since a random number whose pattern is not fixed may be generated without hash calculation each time in the second and subsequent BC account selection processing, the time cost for (N - 1) times of random number generation processing may be low. For this reason, in the present random selection method, as N is larger, for example, as the number of selected BC accounts or the like is larger, the effect of reducing time cost is larger.

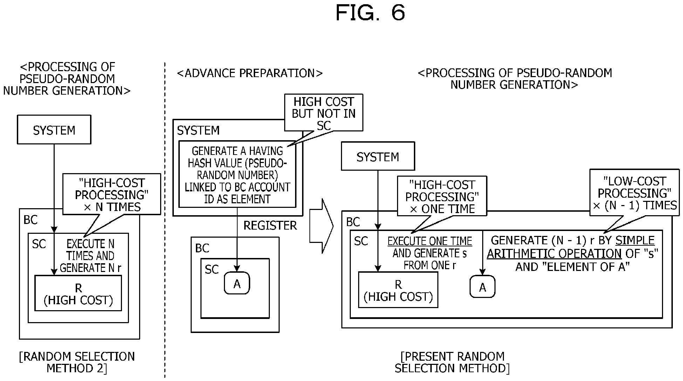

FIG. 6 is a diagram for describing time cost for the random selection method 2 and the present random selection method. The left side in FIG. 6 illustrates the random selection method 2, and the right side illustrates the present random selection method.

As illustrated on the left side in FIG. 6, for example, when N BC accounts are randomly selected, since random number generation processing with high time cost is repeated N times in the random selection method 2, total time cost is very high.

On the other hand, as illustrated on the right side in FIG. 6, in the present random selection method, random number generation processing with high time cost is used for the selection of the first BC account, but time cost may be low for the selection of the second and subsequent BC accounts.

### [Functional Configuration of Account Selection Device 10]

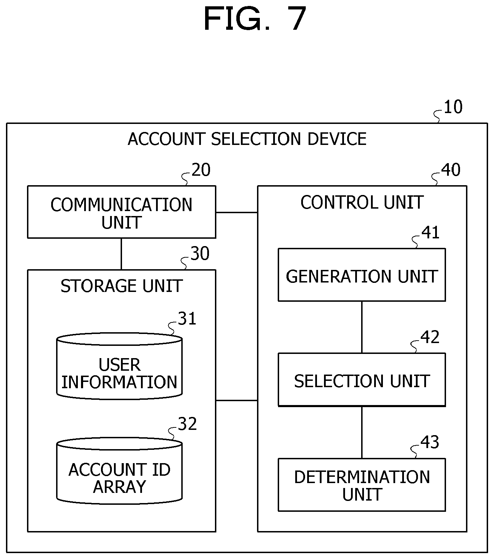

Next, a functional configuration of an account selection device 10, which is an execution subject of the present random selection method, will be described. FIG. 7 is a diagram illustrating a configuration example of the account selection device 10 according to the present embodiment. For example, the account selection device 10 illustrated in FIG. 7 is a server computer or an information processing device such as a desktop personal computer (PC) or a notebook PC. Although the account selection device 10 is illustrated as one computer in FIG. 7, the account selection device 10 may be a decentralized computing system configured by a plurality of computers. The account selection device 10 may be a cloud computer device managed by a service provider that provides a cloud computing service.

As illustrated in FIG. 7, the account selection device 10 includes a communication unit 20, a storage unit 30, and a control unit 40.

The communication unit 20 is a processing unit that controls communication with other devices. For example, the communication unit 20 is a communication interface such as a network interface card or a Universal Serial Bus (USB) interface.

The storage unit 30 has a function of storing various types of data and a program executed by the control unit 40. For example, the storage unit 30 stores user information 31, an account ID array 32, and the like.

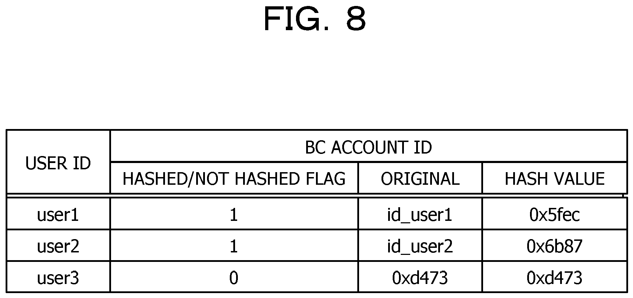

For example, information on users of a decentralized community and the like are stored in the user information 31. The user information 31 may be stored outside the BC. FIG. 8 is a diagram illustrating an example of data stored in the user information 31 according to the present embodiment. As illustrated in FIG. 8, in the user information 31, for example, a user ID uniquely indicating a user of a decentralized community, a BC account ID uniquely indicating an account in a BC associated with the user, and the like are stored in association with each other. The BC account ID may include a hashed/not hashed flag indicating whether the original BC account is hashed, original indicating the original BC account, and a hash value indicating a hashed BC account ID. For example, in a case where a BC account ID is an account address of Ethereum (registered trademark), since the BC account ID is already hashed and does not have to be hashed, "0" (not hashed) is set as the hashed/not hashed flag. For example, the hash value is a BC account ID hashed by using hash function h which is a function that outputs the lower 20 byte of Keccak-256, which is a hash algorithm. In the case where a BC account ID is an account address of Ethereum, the size of hash output by hash function h is the size of the account address of Ethereum.

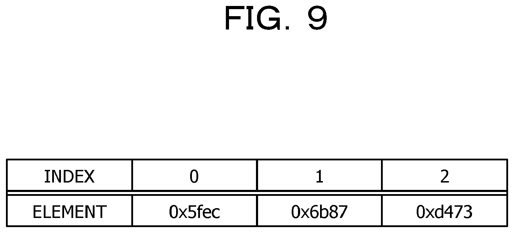

In the account ID array 32, for example, information on identifiers such as the BC account addresses of all users in a decentralized community and the like are stored. The account ID array 32 may be stored in the BC. FIG. 9 is a diagram illustrating an example of data stored in the account ID array 32 according to the present embodiment. As illustrated in FIG. 9, for example, an index and an element indicating a hashed BC account ID are stored in the account ID array 32 in association with each other. For example, a hashed ID obtained by hashing the identifier of each of a plurality of BC accounts in a BC is stored in the BC in association with an index. For example, the identifier of each of a plurality of BC accounts in a BC may be a BC account ID, and a hashed ID may be a hashed BC account ID.

The storage processing may include processing of storing, in association with an index, a hashed ID obtained by hashing the identifier of each of a plurality of BC accounts respectively associated with a plurality of accounts of the same community in a decentralized community system.

The storage processing may include processing of storing, in association with an index, a hashed ID obtained by hashing the identifier of each of a plurality of BC accounts respectively associated with a plurality of persons or a plurality of devices. For example, a plurality of persons respectively associated with a plurality of BC accounts may be persons for which fairness and transparency are desired such as evaluators of a decentralized community, speakers in a meeting or the like, and winners of a prize. For example, a plurality of devices respectively associated with a plurality of BC accounts may be things for which fairness and transparency are desired such as devices for acquiring environmental data.

Returning to the description of FIG. 7, the above information stored in the storage unit 30 is merely an example, and the storage unit 30 may store various information in addition to the above information.

The control unit 40 is a processing unit that controls the entire account selection device 10. For example, the control unit 40 is a processor or the like. The control unit 40 includes a generation unit 41, a selection unit 42, and a determination unit 43. Each processing unit is an example of an electronic circuit of a processor, or an example of a process executed by the processor.

For example, by an SC, the generation unit 41 generates a seed value based on a random number. For example, the SC may be an SC in a blockchain in which a hashed ID obtained by hashing the identifier of each of a plurality of BC accounts is stored in association with an index. For example, the generation processing of a seed value may include processing of performing arithmetic operation for a random number using a hash function, and generating a seed value by hashing the random number. The generation processing of a seed value may include processing of generating a seed value based on a random number generated by using the input values of a plurality of users. The random number generated by using the input values of a plurality of users is a random number generated by the random number generation processing with high time cost described in the random selection method 2 illustrated in FIG. 4. The random number and a seed value generated based on the random number are used for selecting the first hashed ID.

For example, by an SC, the generation unit 41 generates a value for specifying one of a plurality of BC accounts based on a seed value. For example, the processing of generating a value for specifying one of a plurality of BC accounts may be repeated a predetermined number of times by using a first hashed ID selected by the selection unit 42 as the next seed value. For example, the repeated processing is processing for selecting the second and subsequent hashed IDs. For example, by using the selected first hashed ID as the seed value, a random number does not have to be generated for generation of a seed value, unlike the case where the first hashed ID is selected.

For example, by an SC, the selection unit 42 selects a first hashed ID from a plurality of hashed IDs associated with indexes based on the value for specifying one of a plurality of BC accounts generated by the generation unit 41. For example, the SC may be an SC in a blockchain in which a hashed ID obtained by hashing the identifier of each of a plurality of BC accounts is stored in association with an index. For example, the processing of selecting the first hashed ID may be repeated a predetermined number of times by using the first hashed ID selected by the selection unit 42 as the seed value. For example, when the number of BC accounts to be selected is N, the predetermined number of times may be (N - 1) times. Accordingly, N BC accounts are randomly selected with one hashed BC account ID selected by using the random selection method 2 or the like and (N - 1) hashed BC account IDs.

The determination unit 43 receives evaluation for a thing in a community input by users of accounts associated with a plurality of first hashed IDs selected by the selection unit 42, and determines a reward for the thing based on the evaluation. In a case where a hashed ID selected by the selection unit 42 is not used for the selection of an evaluator in a decentralized community, the account selection device 10 does not have to include the determination unit 43 that determines a reward for a thing in a community. For example, a hashed ID selected by the selection unit 42 may be used for the selection of not only an evaluator, but also a person, an object, or the like for which fairness and transparency are desired such as a speaker in a meeting or the like, a device for acquiring environmental data, and a winner of a prize.

### [Flow of Processing]

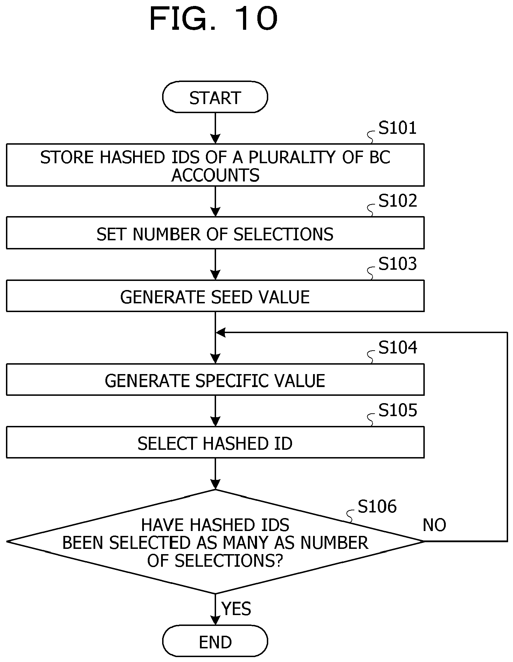

Next, a flow of account selection processing according to the present embodiment will be described with reference to FIG. 10. FIG. 10 is a flowchart illustrating an example of a flow of the account selection processing according to the present embodiment.

First, as illustrated in FIG. 10, for example, the account selection device 10 hashes the identifier of each of a plurality of BC accounts in a BC and generates a hashed ID, and stores the hashed ID in association with an index (step S101). For example, in step S101, a hashed ID may be stored in the account ID array 32 in association with an index, as an element of the account ID array 32. For example, the identifier of each of a plurality of BC accounts in a BC may be a BC account ID, and a hashed ID may be a hashed BC account ID.

Next, for example, the account selection device 10 sets, in an SC, the number of selections, which is the number of persons or objects to be selected such as evaluators in a decentralized community (step S102). For example, at each time of selection, an appropriate number for ensuring fairness and the like, such as 100, may be determined as the number of selections and stored in the storage unit 30 or the like, and the account selection device 10 acquires the number of selections and sets it in an SC for the processing in step S103 and subsequent steps.

Next, by an SC, for example, the account selection device 10 generates a random number by the random selection method 2 illustrated in FIG. 4, and generates a seed value based on the random number (step S103). For example, the account selection device 10 hashes the random number and generates a seed value.

Next, for example, based on a seed value, the account selection device 10 generates a specific value, which is a value for specifying one of the plurality of BC accounts (step S104). For example, generation of a specific value in step S104 is calculation of specific value i using the formula of "i = r mod length(A)". For example, when "x mod y", the operator mod is an operator that changes arbitrary number x to a decimal number and then returns a remainder obtained by dividing the changed arbitrary number x by arbitrary decimal number y. length(A) is an array length of the account ID array A. For example, the account ID array A is the account ID array 32 illustrated in FIG. 9.

The seed value used in step S104 may be the seed value generated in step S103 in the case of the first processing, for example, processing for selecting the first hashed ID. In the case of the second or subsequent time of processing, for example, processing for selecting the second or subsequent hashed ID, the hashed ID selected in step S105 is used as the seed value.

Next, for example, based on the specific value generated in step S104, the account selection device 10 selects a first hashed ID from the plurality of hashed IDs stored in association with indexes in step S101 (step S105).

Next, for example, the account selection device 10 determines whether first hashed IDs have been selected as many as the number of selections set in step S102 (step S106). When first hashed IDs have been selected as many as the number of selections (step S106: Yes), the account selection processing illustrated in FIG. 10 ends.

On the other hand, when first hashed IDs have not been selected as many as the number of selections (step S106: No), for example, the account selection device 10 sets the first hashed ID selected in step S105 as the next seed value and returns to step S104. Steps S104 to S106 are repeated until first hashed IDs are selected as many as the number of selections.

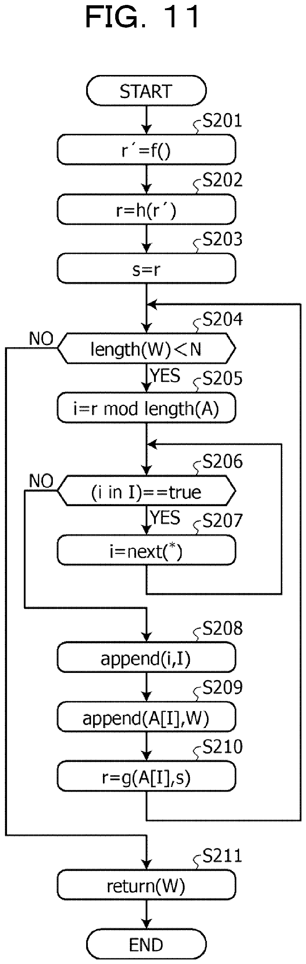

As another example of a flow of account selection processing, the account selection processing according to the present embodiment will be described more specifically with reference to FIGs. 11 to 15. FIG. 11 is a flowchart illustrating another example of a flow of the account selection processing according to the present embodiment.

As illustrated in FIG. 11, the account selection processing according to the present embodiment is processed using various functions. The account selection processing illustrated in FIG. 11 is a description for the random number generation processing and subsequent processing, assuming that the storage processing of hashed IDs (step S101) and the setting processing of the number of selections (step S102) in FIG. 10 are executed in advance.

For example, the account selection processing illustrated in FIG. 11 is executed based on the following assumption. The size of a hash value is 2 byte, and hash function h is a hash function that outputs the lower 2 byte of a random number generated by Keccak-256. A case is assumed in which two evaluators are selected. As the account ID array A, hash values of three BC account IDs are registered as illustrated in the account ID array 32 in FIG. 9. For example, function g using an exclusive OR (XOR) is used for calculation of an element of the account ID array A and seed value s. Open addressing is used in a case where indexes overlap at the time of account selection. In this method, for example, a value obtained by incrementing an index is output, and 0 is output when the incremented index exceeds "length(A) - 1". In a case where an already selected BC account ID is further selected, function next() that outputs another index of the account ID array A is used, and an argument of next() is next(i,length(A) - 1). Random number r' generated by the method of generating a random number in an SC is 1.

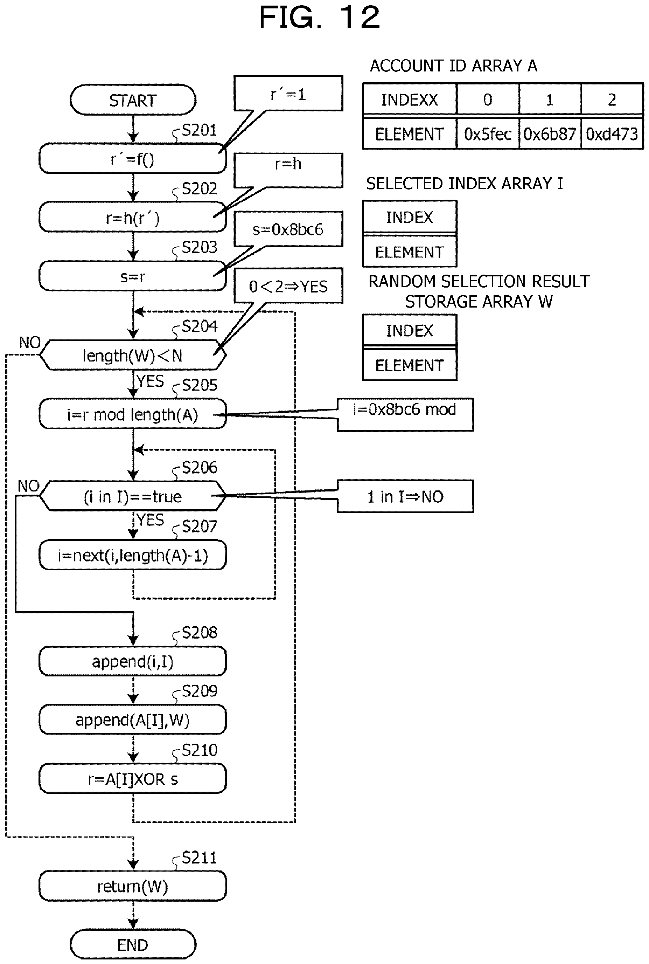

The account selection processing illustrated in FIG. 11 is described by being divided into several processing steps with reference to FIGs. 12 to 15. FIG. 12 is a diagram (1) for describing the flowchart illustrating another example of a flow of the account selection processing according to the present embodiment. In FIG. 12, a flow of processing in arrows indicated by solid lines (steps S201 to S206: No) will be described. The state of each array is illustrated on the right side in FIG. 12. As described above, the account ID array A is an array corresponding to the account ID array 32 in FIG. 9. For example, a selected index array I is an array of indexes in the account ID array A of selected BC account IDs. For example, a random selection result storage array W is an array that stores the addresses of selected BC accounts. Since no BC account has been selected yet at the stage of the account selection processing illustrated in FIG. 12, the selected index array I and the random selection result storage array W are empty.

First, as illustrated in FIG. 12, for example, the account selection device 10 calculates "r' = f()" (step S201). For example, function f() is a function that generates a pseudo-random number by an SC as described in the random selection method 2 illustrated in FIG. 4. For example, random number r' is a pseudo-random number generated by function f(). As described above, the random number r' generated in step S201 is 1.

Next, for example, the account selection device 10 calculates "r = h(r')" (step S202). For example, as described above, function h() is a hash function that outputs the lower 2 byte of a random number generated by Keccak-256. For example, r is a pseudo-random number obtained by hashing random number r' by hash function h(). The random number calculated in step S202 is "r = h(1) = 0x8bc6".

Next, for example, the account selection device 10 calculates "s = r" (step S203). For example, s is a seed value. Step S203 means that the random number r calculated in step S202 is used as the seed value. For example, "s = 0x8bc6".

Next, for example, the account selection device 10 determines the condition "length(W) < N" (step S204). For example, "length(W)" is a function that returns the array length of the random selection result storage array W. Since no BC account has been selected yet, the random selection result storage array W is empty, and "length(W) = 0". For example, the number of selections N is the number of evaluators to be selected. Since two evaluators are selected as described above, "N = 2". Accordingly, "length(W) < N" is "0 < 2", and the processing proceeds to the Yes route in step S204.

Next, for example, the account selection device 10 calculates "i = r mod length(A)" (step S205). For example, when "x mod y", the operator mod is an operator that changes arbitrary number x to a decimal number and then returns a remainder obtained by dividing the changed arbitrary number x by arbitrary decimal number y. Length(A) is 3 since it is the array length of the account ID array A. For this reason, in step S205, "i = r mod length(A)" is "i = 0x8bc6 mod 3", and "i = 1". For example, i calculated here is a specific value generated in step S104 in the account selection processing illustrated in FIG. 10.

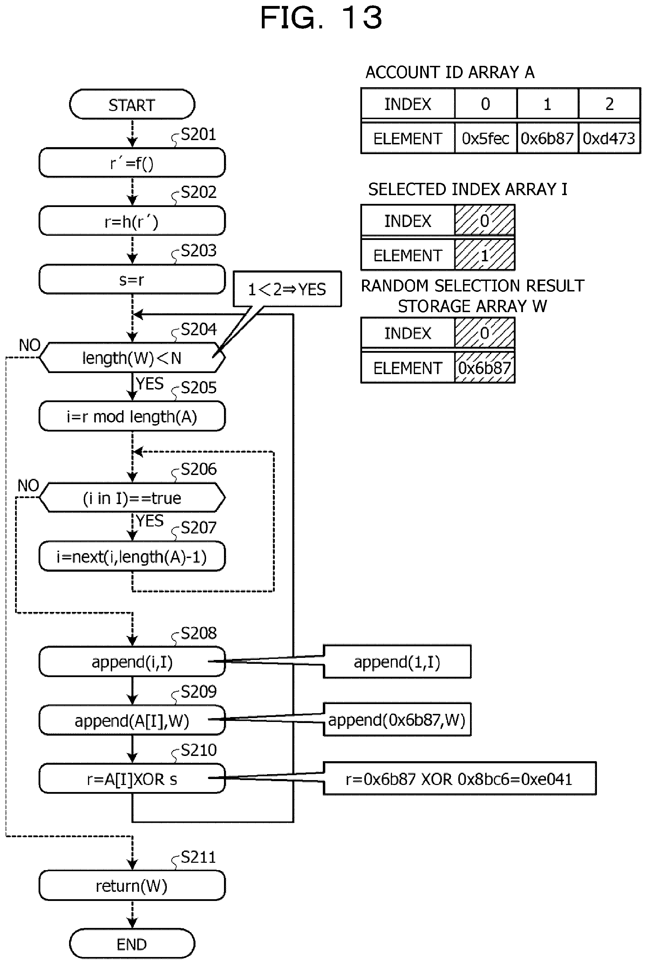

Next, for example, the account selection device 10 determines the condition "(i in I) == true" (step S206). For example, "i in I" is processing of returning "true" in a case where there is i in the elements of the selected index array I, and returning "false" in other cases. Here, since no BC account has been selected yet, there is no element in the selected index array I, "(i in I) = (1 in I) = false", and the processing proceeds to the No route in step S206. After the processing proceeds to the No route in step S206, step S208 is executed. From this point on, description will be given with reference to FIG. 13.

FIG. 13 is a diagram (2) for describing the flowchart illustrating another example of a flow of the account selection processing according to the present embodiment. In FIG. 13, description will be given for the flow of processing in arrows indicated by a solid line (steps S208 to S210, back to step S204, and to step S204: Yes), following the account selection processing described with reference to FIG. 12.

Proceeding from the No route in step S206, next, for example, the account selection device 10 calculates "append(i,I)" (step S208). For example, when "append(x,X)", "append(i,I)" is a function that adds element x to array X. For this reason, "append(i,I)" is processing of adding element i to the selected index array I. Here, since "i = 1" is calculated in step S205, "append(i,I)" is "append(1,I)", and as illustrated on the right side in FIG. 13, the element "1" is added to the selected index array I.

Next, for example, the account selection device 10 calculates "append(A[i],W)" (step S209). Here, since "i = 1" is calculated in step S205, A[i] is A[1], and A[1] is "Ox6b87" as illustrated on the right side in FIG. 13. For this reason, "append(A[i],W)" is "append(0x6b87,W)", and as illustrated on the right side in FIG. 13, the element "0x6b87" of index 1 of the account ID array A is added to the random selection result storage array W. For example, A[i] added here is a hashed ID selected in step S105 in the account selection processing illustrated in FIG. 10.

Next, for example, the account selection device 10 calculates "r = A[i] XOR s" (step S210). For example, the account selection device 10 calculates random number r for selecting the next hashed ID by using A[i], which is a selected hashed ID, as the next seed value. For example, since the calculation of a random number here uses a simple exclusive OR (XOR) as the processing, time cost may be reduced as compared with the calculation of a random number by the random selection method 2 or the like in which hash calculation is performed. In step S210, since "A[i] = A[1] = 0x6b87" and seed value s calculated in step S203 is "0x8bc6", "r = A[i] XOR s" is "r = 0x6b87 XOR Ox8bc6 = 0xe041".

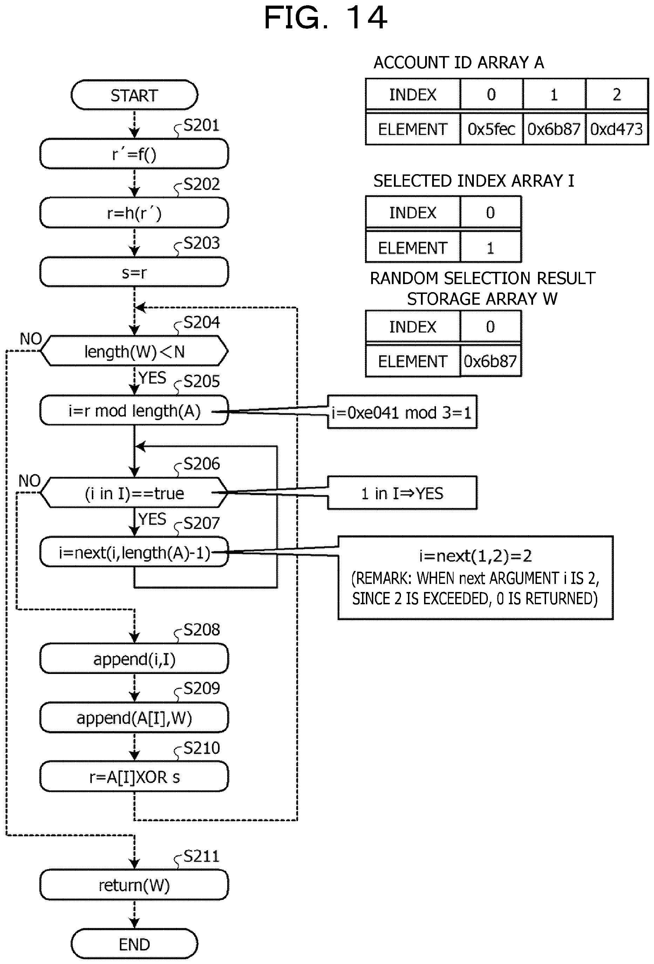

Next, for example, the account selection device 10 determines the condition "length(W) < N" (step S204). Here, since one element is added to the random selection result storage array W in step S209, "length(W) = 1", and since "N = 2", "length(W) < N" is "1 < 2", and the processing proceeds to the Yes route. After the processing proceeds to the Yes route in step S204, step S205 is executed. From this point on, description will be given with reference to FIG. 14.

FIG. 14 is a diagram (3) for describing the flowchart illustrating another example of a flow of the account selection processing according to the present embodiment. In FIG. 14, description will be given for the flow of processing in arrows indicated by a solid line (steps S205 to S207), following the account selection processing described with reference to FIG. 13.

Proceeding from the Yes route in step S204, next, for example, the account selection device 10 determines the condition "(i in I) == true" (step S206). Here, since "i = 1" and the element "i = 1" is added to the selected index array I in step S208, "(i in I) = (1 in I) = true", and the processing proceeds to the Yes route.

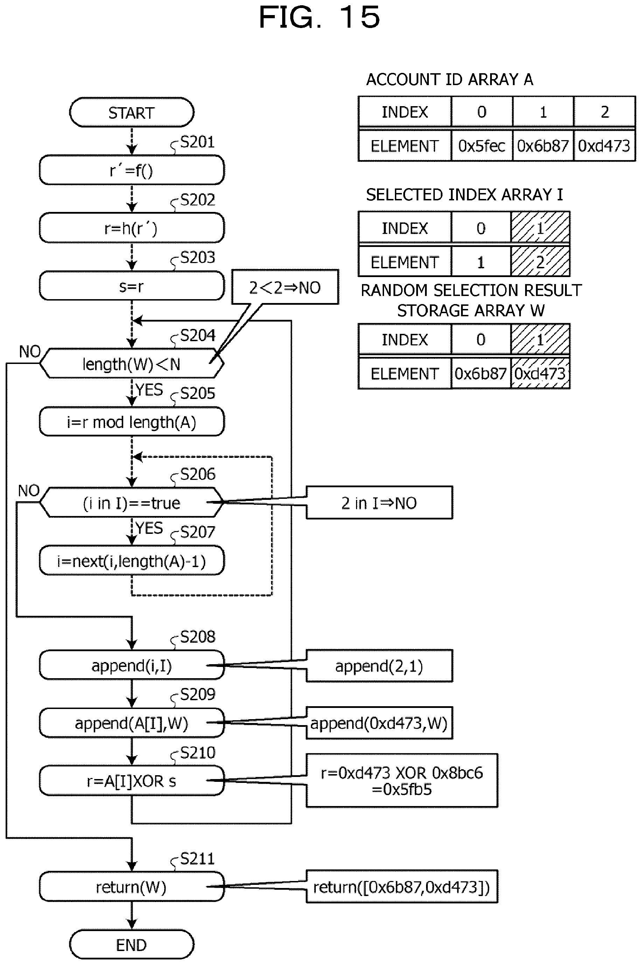

Next, for example, the account selection device 10 calculates "i = next(i,length(A) - 1)" (step S207). For example, function next() is a function that is used in a case where an already selected BC account ID is further selected, and outputs another index of the account ID array A. Here, since "length(A)" is 3, "i = next(i,length(A) - 1) = next(1,2) = 2". In a case where argument i of function next() is 2, since 2 is exceeded, 0 is returned as the return value. After step S207 is executed, step S206 is executed. From this point on, description will be given with reference to FIG. 15.

FIG. 15 is a diagram (4) for describing the flowchart illustrating another example of a flow of the account selection processing according to the present embodiment. In FIG. 15, description will be given for the flow of processing in arrows indicated by a solid line (steps S206 to S210, back to step S204, step S211, and to the end of processing), following the account selection processing described with reference to FIG. 14.

Proceeding from step S207, next, for example, the account selection device 10 determines the condition "(i in I) == true" (step S206). Here, since "i = 2" is calculated in step S207, "(i in I) = (2 in I) = false", and the processing proceeds to the No route.

Next, for example, the account selection device 10 calculates "append(i,I)" (step S208). Here, since "i = 2" is calculated in step S207, "append(i,I)" is "append(2,I)", and as illustrated on the right side in FIG. 15, the element "2" is added to the selected index array I.

Next, for example, the account selection device 10 calculates "append(A[i],W)" (step S209). Here, since "i = 2" is calculated in step S207, A[i] is A[2], and A[2] is "0xd473" as illustrated on the right side in FIG. 15. For this reason, "append(A[i],W" is "append(0xd473,W)", and as illustrated on the right side in FIG. 15, the element "0xd473" of index 2 of the account ID array A is added to the random selection result storage array W.

Next, for example, the account selection device 10 calculates "r = A[i] XOR s" (step S210). Here, since "A[i] = A[2] = 0xd473" and seed value s calculated in step S203 is "0x8bc6", "r = A[i] XOR s" is "r = 0xd473 XOR 0x8bc6 = 0x5fb5".

Next, for example, the account selection device 10 determines the condition "length(W) < N" (step S204). Here, since one element is further added to the random selection result storage array W in step S209 and the number of elements is two, "length(W) = 2", and since "N = 2", "length(W) < N" is "2 < 2", and the processing proceeds to the No route.

Next, for example, the account selection device 10 calculates "return(W)" (step S211). For example, since function return() is a function that returns an argument, elements of the random selection result storage array W are returned, and "return(W)" is "return([Ox6b87,Oxd473])". For example, an element returned here is a randomly selected BC account ID. For example, by using the element, the account selection device 10 may select a person, an object, or the like for which fairness and transparency are desired such as an evaluator of a decentralized community. After step S211 is executed, the account selection processing ends.

### [Effects]

As described above, by a smart contract in a blockchain in which a hashed ID obtained by hashing the identifier of each of a plurality of blockchain (BC) accounts is stored, the account selection device 10 generates a seed value based on a random number, selects a first hashed ID from a plurality of hashed IDs based on the seed value, and selects a second hashed ID from the plurality of hashed IDs with the selected first hashed ID as the seed value.

In this way, when a plurality of hashed IDs obtained by hashing the identifiers of BC accounts in a BC is randomly selected by an SC, the hashed ID selected by the seed value based on the random number is used as the seed value for selecting the next hashed ID. Accordingly, the account selection device 10 may reduce time cost in the case where a plurality of BC accounts in a BC is randomly selected by an SC.

The account selection device 10 repeats, a predetermined number of times, processing of selecting the next second hashed ID from the plurality of hashed IDs with the selected second hashed ID as the seed value.

Accordingly, the account selection device 10 may reduce time cost in the case where a plurality of BC accounts in a BC is randomly selected by an SC.

The processing of generating a seed value executed by the account selection device 10 includes processing of generating a seed value based on a random number generated by using the input values of a plurality of users.

Accordingly, the account selection device 10 may reduce time cost in the case where a plurality of BC accounts in a BC is randomly selected by an SC, while ensuring fairness and transparency.

The processing of generating a seed value executed by the account selection device 10 includes processing of performing arithmetic operation for a random number using a hash function and generating a seed value.

Accordingly, the account selection device 10 may reduce time cost in the case where a plurality of BC accounts in a BC is randomly selected by an SC, while ensuring fairness and transparency.

The account selection device 10 stores, in association with an index, a hashed ID obtained by hashing the identifier of each of a plurality of BC accounts respectively associated with a plurality of accounts in the same community in a decentralized community system.

Accordingly, the account selection device 10 may reduce time cost in the case where a plurality of BC accounts in a BC, which is associated with the accounts in a decentralized community, is randomly selected by an SC.

The account selection device 10 receives evaluation for a thing in a community input by users of accounts associated with a selected plurality of first hashed IDs.

Accordingly, the account selection device 10 may perform evaluation in which fairness and transparency are ensured for a thing in a community.

The account selection device 10 determines a reward for a thing based on evaluation.

Accordingly, the account selection device 10 may determine a more appropriate reward for a thing in a community by using evaluation in which fairness and transparency are ensured.

The account selection device 10 stores, in association with an index, a hashed ID obtained by hashing the identifier of each of a plurality of BC accounts respectively associated with a plurality of persons or a plurality of devices.

Accordingly, the account selection device 10 may reduce time cost in the case where a plurality of BC accounts in a BC, which is associated with persons and devices, is randomly selected by an SC, while ensuring fairness and transparency.

### [System]

Unless otherwise specified, the processing procedures, control procedures, specific names, and information including various types of data and parameters described in the above description or drawings may be arbitrarily changed. The specific examples, distribution, numerical values, and the like described in the exemplary embodiment are merely examples, and may be arbitrarily changed.

Specific form of distribution or integration of the constituent elements of the account selection device 10 is not limited to that illustrated in the drawings. For example, the selection unit 42 of the account selection device 10 may be distributed to a plurality of processing units, or the generation unit 41 and the selection unit 42 of the account selection device 10 may be integrated into one processing unit. For example, all or a part of the constituent elements may be functionally or physically distributed or integrated in arbitrary units depending on various types of loads, usage states, or the like. All or arbitrary part of each processing function of each device may be realized by a central processing unit (CPU) or a program analyzed and executed by the CPU, or may be realized by hardware using wired logic.

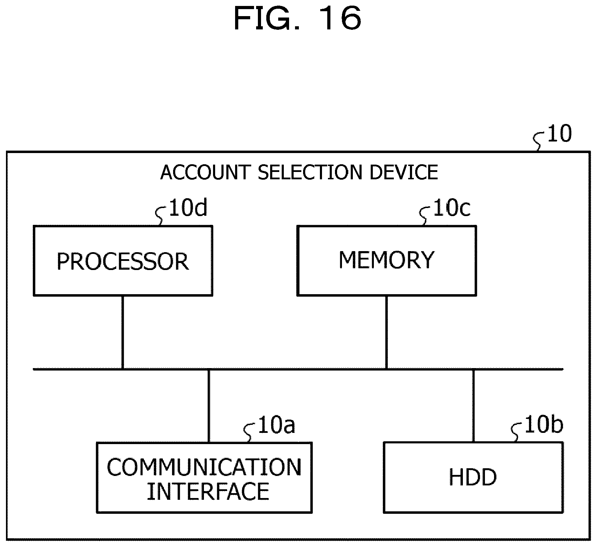

FIG. 16 is a diagram illustrating a hardware configuration example of the account selection device 10 according to the present embodiment. As illustrated in FIG. 16, the account selection device 10 includes a communication interface 10a, a hard disk drive (HDD) 10b, a memory 10c, and a processor 10d. The devices illustrated in FIG. 16 are coupled to each other by a bus or the like.

The communication interface 10a is a network interface card or the like, and performs communication with other information processing devices. For example, in a case of the account selection device 10, the HDD 10b stores data and programs that cause each function illustrated in FIG. 7 and the like to operate.

The processor 10d is a CPU, a microprocessor unit (MPU), a graphics processing unit (GPU), or the like. The processor 10d may be realized by an integrated circuit such as an application-specific integrated circuit (ASIC) or a field-programmable gate array (FPGA). For example, the processor 10d reads, from the HDD 10b or the like, a program that executes processing similar to that performed by each processing unit illustrated in FIG. 7 and the like, and loads the read program to the memory 10c. Thus, the processor 10d may be operated as a hardware circuit that executes the processes that realize each function described with reference to FIG. 7 and the like.

The account selection device 10 may also realize functions similar to those of the above exemplary embodiment by reading the above program from a recording medium with a medium reading device and executing the above read program. The program referred to in this other exemplary embodiment is not limited to being executed by the account selection device 10. For example, the above exemplary embodiment may be similarly applied to a case where an information processing device other than the account selection device 10 executes the program, and a case where the account selection device 10 and another information processing device execute the program in cooperation with each other.

The program may be distributed via a network such as the Internet. The program may be recorded in a computer-readable recording medium such as a hard disk, a flexible disk (FD), a compact disc read-only memory (CD-ROM), a magneto-optical (MO) disk, or a Digital Versatile Disc (DVD). The program may executed by being read from a recording medium by the account selection device 10 or the like.

## Claims

1. An account selection program for causing a computer to execute a process comprising:
by a smart contract in a blockchain in which a hashed identifier (ID) obtained by hashing an identifier of each of a plurality of blockchain (BC) accounts is stored,
generating a seed value based on a random number;
selecting a first hashed ID from a plurality of the hashed IDs based on the seed value; and
selecting a second hashed ID from the plurality of the hashed IDs with the selected first hashed ID as the seed value.

2. The account selection program according to claim 1, wherein
the computer is caused to execute a process of repeating, a predetermined number of times, processing of selecting a next second hashed ID from the plurality of the hashed IDs with the selected second hashed ID as the seed value.

3. The account selection program according to claim 1 or 2, wherein
the generating of the seed value includes
generating the seed value based on the random number generated by using input values of a plurality of users.

4. The account selection program according to claim 1 or 2, wherein
the generating of the seed value includes
performing arithmetic operation for the random number using a hash function and generating the seed value.

5. The account selection program according to claim 1 or 2, wherein the computer is caused to execute a process of storing, in association with an index, the hashed ID obtained by hashing an identifier of each of the plurality of BC accounts respectively associated with a plurality of accounts in a same community in a decentralized community system.

6. The account selection program according to claim 5, wherein the computer is caused to execute a process of receiving evaluation for a thing in the community input by users of the accounts associated with a selected plurality of the first hashed IDs.

7. The account selection program according to claim 6, wherein the computer is caused to execute a process of determining a reward for the thing based on the evaluation.

8. The account selection program according to claim 1 or 2, wherein the computer is caused to execute a process of storing, in association with an index, the hashed ID obtained by hashing an identifier of each of the plurality of BC accounts respectively associated with a plurality of persons or a plurality of devices.

9. An account selection device comprising:
a memory, and
a processor coupled to the memory, and configured to:
by a smart contract on a blockchain in which a hashed identifier (ID) obtained by hashing an identifier of each of a plurality of blockchain (BC) accounts is stored,
generate a seed value based on a random number;
select a first hashed ID from a plurality of the hashed IDs based on the seed value; and
select a second hashed ID from the plurality of the hashed IDs with the selected first hashed ID as the seed value.

10. The account selection device according to claim 9, wherein
the processor is further configured to repeat, a predetermined number of times, processing of selecting a next second hashed ID from the plurality of the hashed IDs with the selected second hashed ID as the seed value.

11. The account selection device according to claim 9 or 10, wherein
the generating of the seed value includes
generating the seed value based on the random number generated by using input values of a plurality of users.

12. The account selection device according to claim 9 or 10, wherein
the generating of the seed value includes
performing arithmetic operation for the random number using a hash function and generating the seed value.

13. The account selection device according to claim 9 or 10, wherein the processor is further configured to store, in association with an index, the hashed ID obtained by hashing an identifier of each of the plurality of BC accounts respectively associated with a plurality of accounts in a same community in a decentralized community system.

14. An account selection method performed by a computer, the method comprising:
by a smart contract on a blockchain in which a hashed identifier (ID) obtained by hashing an identifier of each of a plurality of blockchain (BC) accounts is stored,
generating a seed value based on a random number;
selecting a first hashed ID from a plurality of the hashed IDs based on the seed value; and
selecting a second hashed ID from the plurality of the hashed IDs with the selected first hashed ID as the seed value.

15. The account selection method according to claim 14, wherein
the method further comprising:
repeating, a predetermined number of times, processing of selecting a next second hashed ID from the plurality of the hashed IDs with the selected second hashed ID as the seed value.
